# EUROPEAN PATENT APPLICATION

(11) **EP 4 706 404 A1**
(43) Date of publication of application: **11.03.2026**
(21) Application number: 24799821.4
(22) Date of filing: 26.04.2024
(51) Int. Cl.: A23L 3/3472, A23L 19/00, C11B 5/00

(54) **MICROENCAPSULATED NATURAL PRESERVATIVE AND ANTIOXIDANT FOR FATTY FOODS, WITH WALNUT HUSK AND WALNUT TREE LEAF EXTRACT**

(30) Priority: 03.05.2023 CL 202301279
(71) Applicant: Universidad Andres Bello, Santiago 8370035 (CL)
(72) Inventor: URREGO CAMELO, Freddy, Santiago, 7591538 (CL); CEA PAVEZ, Inés, Santiago, 8370035 (CL); RESTOVIC CARVAJAL, Franko, Santiago, 7591538 (CL); PARADA VALDECANTOS, Pilar, Santiago, 7591538 (CL)
(74) Representative: Isern Patentes y Marcas S.L.
(86) International application number: PCT/CL2024/050040
(87) International publication number: WO 2024/227266

(57) **Abstract**

The invention relates to a method of obtaining a microencapsulated natural preservative and antioxidant, comprising extract of walnut leaves and husk, the preservative obtained and its use for preserving foods containing fats

Where the natural preservative is specifically a hydroalcoholic extract of walnut husk and/or walnut leaves, which is microencapsulated with a water-soluble polymer (WSP), such as maltodextrin or inulin, and where the microparticle comprises channeling agents, which are fat-soluble polymers (FSP), such as soy protein isolate or capsule. These microparticles have a controlled release action of the antioxidant and preservative extract, which allows a sustained action over time.

## Description

### BACKGROUND TO THE INVENTION

The food industry worldwide requires preservative and antioxidant compounds so that food retains its nutritional and organoleptic properties and remains safe from its preparation to consumption. In addition, there is a worldwide trend to require additives, such as preservatives and antioxidants, to be of natural origin.

To make this scenario even more complex, foods are complex matrices, where not all components deteriorate in the same way, it being particularly difficult to extend the shelf life of foods that contain fats, which tend to oxidize causing the phenomenon known as "rancidity". This phenomenon can vary depending on the percentage of fat contained in the food in question.

Faced with this scenario, the inventors have developed a system of microencapsulated natural compounds that contain a natural extract with antioxidant and preservative properties, with a modified release that allows food that includes fats to be preserved throughout its shelf life and that adapts to the food that must be preserved. Specifically, the extract is from byproducts of nut production.

Walnut leaves, and the soft outer shell of walnuts, known as "walnut husk" are rich in antioxidants and polyphenols, so *a priori* it can be estimated that it is a candidate to obtain an antioxidant and preservative composition. However, it is known that both plant tissues are rich in a toxic compound, juglone, or 5-hydroxy-1,4-naphthalenedione. This compound serves the walnut tree as a defense mechanism against surrounding plants, as it can prevent its growth in the area near the tree, a process known as allelopathy. Since its discovery, the juglone has occasionally been used as a herbicide and anthelmintic. It has been associated with induction of DNA damage, inhibition of transcription, reduction of p53 protein levels, and induction of cell death. This is why there are few applications for these by-products of nut production, where they had not been used as a source of ingredients for food use. Different preservatives, antioxidants and microencapsulated plant extracts are known in the state of the art, but none anticipates the present invention.

For example, patent application MX2017009114, (UNIVERSIDAD AUTÓNOMA METROPOLITANA, 2019), discloses a natural preservative with antioxidant and antimicrobial capacity that is obtained by encapsulating an aqueous extract of avocado peel and nisin, where the aqueous extract of peel is encapsulated with the alginate-collagen or pectin-collagen mixture. This microencapsulated preservative is postulated for the preservation of meats, the application includes examples with ground meat. As will be seen below with the full definition of the invention, there are multiple differences with this document. In addition to the plant material used, it differs in the encapsulation system used, where the invention comprises a modified release system, and which is specific for fats.

The advantage of the product of the invention is the use of microencapsulated natural extracts obtained from discarded walnut products, such as the leaves and husk, with a modified release characteristic. These extracts are rich in polyphenols, which have antioxidant capacity, but also have additional preservative properties, as demonstrated later in the examples, since they inhibit the proliferation of microorganisms beyond what antioxidants and synthetic preservatives normally used in industry do.

### DESCRIPTION OF THE FIGURES

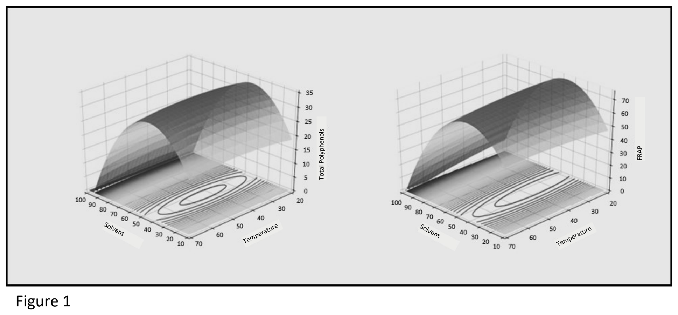

Figure 1. Response surface graphs for the optimization of the extraction process of antioxidant compounds from walnut husk. a) total polyphenol response surface and b) antioxidant capacity response surface (FRAP).

### DETAILED DESCRIPTION OF THE INVENTION

The invention relates to a method of obtaining a microencapsulated natural preservative and antioxidant, comprising extract of walnut leaves and husk, the preservative obtained and its use to preserve foods containing fats.

Where the natural preservative is specifically a hydroalcoholic extract of walnut husk and/or walnut leaves, which is microencapsulated with a water-soluble polymer (WSP), such as maltodextrin or inulin, and where the microparticle comprises channeling agents, which are fat-soluble polymers (FSP), such as soy protein isolate or capsule. These microparticles have a controlled release action of the antioxidant and preservative extract, which allows a sustained action over time.

A flowchart of the development of the invention of microencapsulated natural extracts obtained from walnut waste products is presented in Diagram 1 below.

As we have already indicated, foods are complex matrices, with specific conservation needs. Foods with a fat content greater than 20%, which are not frozen, such as mayonnaise (both normal and light in calories), butter, oil or other sauces high in fat and slow consumption, require a preservative of controlled release that extends the shelf life of this food, so the microparticles of the invention with channeling agents that allow a controlled release of the extract of the invention are especially useful in a high-fat food.

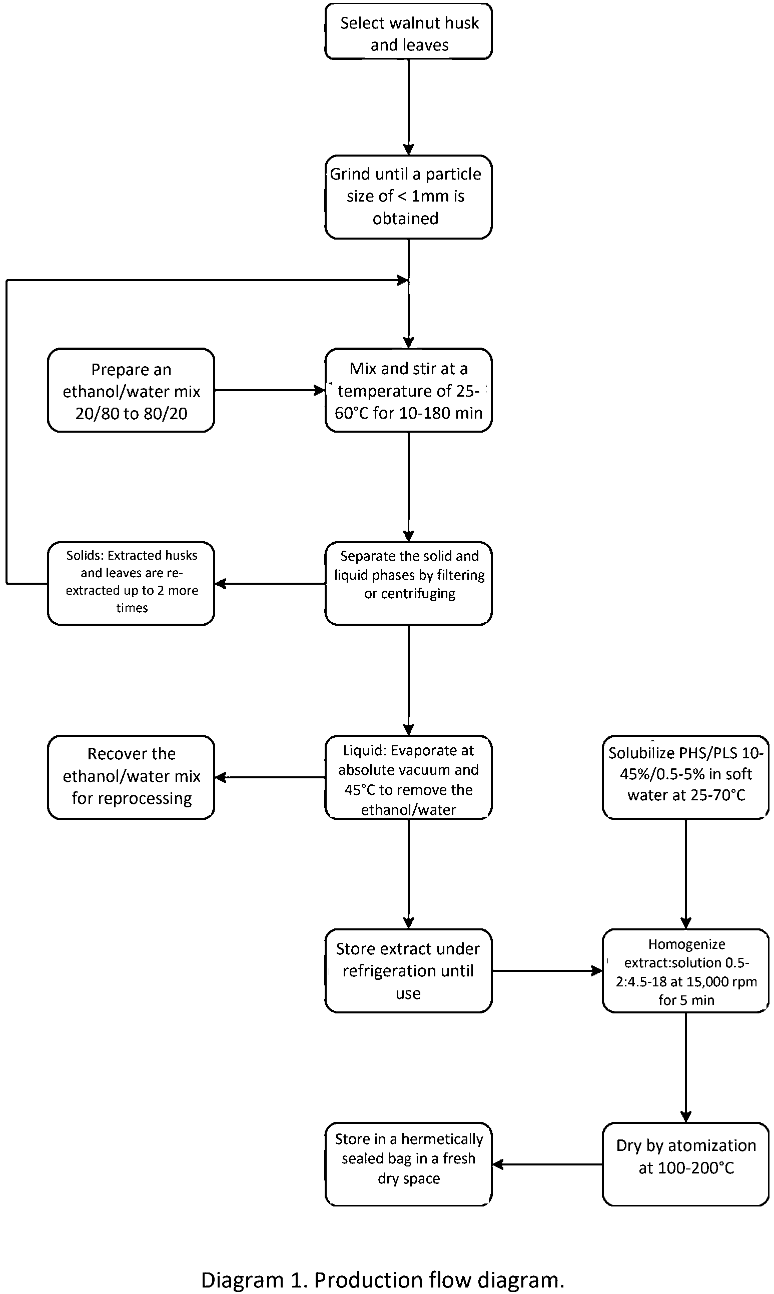

First, the inventors obtained hydroethanolic extract from walnut husk and/or walnut leaves, and characterized it for its antioxidant properties, which proved to be excellent. The inventors optimized the method of obtaining the extract, which was shown in diagram 1, where the highest concentration of antioxidant compounds is obtained by extracting from walnut leaves and/or walnut husk, dried, with a moisture percentage of less than 10%, and crushed, and using between 20 and 80% ethanol and 80 to 20% water. Where the extract is obtained by performing a solid-liquid extraction of the plant material for 10 to 180 minutes at a temperature between 25 and 60°C, in a ratio of plant material to solvent between 1:10 and 1:50 w/v. Where the extraction process can be carried out between 1 to 3 times for each batch of plant material. Once the extract has been obtained, it is optionally dried by spray between 100 and 200°C.

As we have already anticipated, the extracts obtained have a high antioxidant capacity, Total Phenol values were obtained; expressed as Gallic Acid Equivalent (GAE) of between 30 mg and 140 mg in 100 ml, and the antioxidant capacity measured by the FRAP method (*Ferric Reducing Antioxidant Power*), had values between 70 mg and 140 mg Trolox in 100 ml of extract.

Additionally, and as we indicated, it is known that walnut husk and walnut leaves have components that can be toxic, such as juglone, which due to its chemical characteristics could be present in the extract. Therefore, to evaluate whether the extracts of the invention are safe for human consumption, toxicity studies were carried out, which are shown in the examples. These studies established that the extracts of the invention are not toxic to human cells, and are therefore suitable for consumption in food.

Second, these extracts are encapsulated in a mixture of fat-soluble polymer and water-soluble polymers to maintain the release of the preservative over time.

This polymer mixing alternative made it possible to obtain antioxidant microparticles with modified release in lipid media, by using a water-soluble polymer (such as maltodextrin and inulin) as an encapsulating agent and a fat-soluble polymer (as soy protein isolate and capsule) as a channeling agent. The latter allows the formation of channels and favors the release of antioxidants from the microparticles to the lipid medium. (See Diagram 2).

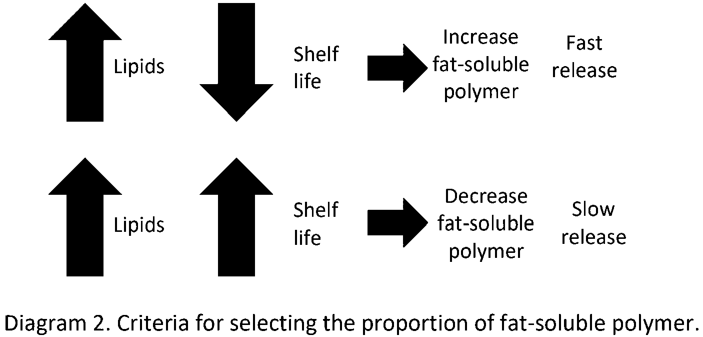

**In** this way, the invention refers to a method of obtaining a natural preservative for foods with different proportions of fats, which includes the following steps:
a) providing walnut husk and/or crushed walnut leaves;
b) performing a hydroalcoholic extraction with a solvent comprising 20 to 80% ethanol and 80 to 20% water for 10 to 180 minutes; at a temperature between 25-60°C, in a ratio of plant material to solvent between 1:10 and 1:50 w/v;
c) separating the solvent constituting the extract,
d) mixing said extract with a solution of a polymer mixture in a ratio of 0.5-2:4.5-18, and homogenizing; where the channeling agent, which is a fat-soluble polymer, is in an amount of up to 10% compared to a water-soluble polymer.
e) spray-drying the mixture; at a temperature between 100-200°C.
f) obtaining a powder comprising the microencapsulated extract.

Where walnut husk and/or walnut leaves have a moisture percentage of less than 10%.

Preferably in step b) the extraction is carried out with 60% ethanol and 40% water; and this step can be repeated up to 3 times. Water-soluble polymers are chosen between maltodextrin and/or inulin; and the channeling agent or fat-soluble polymer is chosen between soy protein isolate and/or capsule. Conveniently, the fat-soluble polymer, or channeling agent, is in a ratio of between 1 to 10% to the water-soluble polymer.

Additionally, the extract obtained in step c) contains total phenols at a concentration between 30 mg of gallic acid equivalent in 100 mL of extract and 140 mg of gallic acid equivalent in 100 ml, and the antioxidant capacity measured by the FRAP (*Ferric Reducing Antioxidant Power*) method, has values between 70 mg Trolox in 100 mL of extract and 140 mg Trolox in 100 ml of extract.

In a second aspect, the invention points to a natural preservative and antioxidant for foods with fat content, obtained according to the method of the invention, where the preservative comprises extract of walnut husk and/or walnut leaves microencapsulated in water-soluble polymer containing a channeling agent or fat-soluble polymer, where the ratio between the extract and the polymer solution is between 0.5-2:4.5-18.

On the other hand, the polymer solution has a water-soluble polymer composition: channeling agent or fat-soluble polymer of 10-45%:0.5-5%, where the volume is completed with soft water in 50-89.5%.

Where the water-soluble polymer is chosen between maltodextrin and inulin; and the channeling agent or fat-soluble polymer is chosen between soy protein isolate and capsule; and is found in a proportion of between 1 and 10% with respect to the total polymer. And microencapsulated walnut husk and/or walnut leaf extract has between 8 to 20 mg Gallic acid equivalents (GAE) per g of microparticle.

In another embodiment, the invention points to the use of the invention's preservative and antioxidant to preserve foods or food compositions with a fat content greater than 20%. Where the preservative and antioxidant of the invention is added in a sufficient amount to obtain between 200 to 800 mg Gallic acid equivalents (GAE) per kilogram of food or food compositions. It is preferably added in a sufficient amount to obtain between 300 to 600 mg Gallic acid equivalents (GAE) per kilogram of food or food compositions. Where, in a realization, the preservative and antioxidant of the invention is used to preserve foods or food compositions with a fat content greater than 50%.

The invention and its scope will be clearer through the following examples.

### EXAMPLES

### Example 1: Obtaining walnut leaf and husk extract to be microencapsulated

### 1.1. Preparation of plant material

The fresh walnut leaves (50% humidity approx.) were dehydrated at 60ºC for a period of 24 hours, allowing the removal of the water contained in the biomass to a final humidity of 4.5%.

The walnut husk was not subjected to drying, as it had a humidity of 9.4%.

These plant materials were ground and sieved, separately, in order to increase the surface area available for the extraction of the compounds of interest. Values less than 1 mm were used. Once the obtained powders have been sifted, they are mixed in a ratio of 20:80 to 80:20 to continue the extraction process.

In this example, they were mixed in a 50:50 ratio.

### 1.2 Optimization of the antioxidant compound extraction process.

An experimental design of central compound 2², with axial points (Table 1), was carried out with 13 experiments (Table 2). The extraction time was maintained as a fixed parameter at 3 hours and the ratio of sample and solvent at 1:50 w/v.

**Table 1. Design of experiments used in the optimization of the extraction process of antioxidant compounds from walnut husk.**

| Factor | -α | -1 | 0 | 1 | A |
|---|---|---|---|---|---|
| Solvent (% ethanol) | 21.2 | 30 | 50 | 70 | 78.28 |
| Temperature (°C) | 23.79 | 30 | 45 | 60 | 66.21 |

**Table 2. Experimental conditions.**

| **Experiment** | **Solvent (% Ethanol)** | **Temperature (°C)** |
|---|---|---|
| 1 | 78.28 | 45 |
| 2 | 21.2 | 45 |
| 3 | 50 | 45 |
| 4 | 50 | 66.21 |
| 5 | 70 | 30 |
| 6 | 30 | 60 |
| 7 | 50 | 45 |
| 8 | 50 | 45 |
| 9 | 70 | 60 |
| 10 | 50 | 45 |
| 11 | 30 | 30 |
| 12 | 50 | 23.79 |
| 13 | 50 | 45 |

The optimization was carried out maximizing the content of total polyphenols and the antioxidant capacity, for this the response surface was used for each of the variables studied, the response surface graphs for the optimization of the process of extraction of antioxidant compounds from a mixture of walnut husk and leaves, are presented in Figure 1. It shows that hydroalcoholic extraction can be carried out with a solvent comprising 20 to 80% ethanol and 80 to 20% water, with temperatures between 25 and 60°C. Those that are thus established in as the parameters used in the invention.

For the following studies, the extract obtained with 60% ethanol and 40% water was used.

### 1.2.1. Chemical characterization of the extract of walnut husk and/or leaves.

The extract obtained was characterized with respect to total phenols (TP) expressing the results as Gallic acid equivalents (GAE). Additionally, the antioxidant capacity was determined by the FRAP method, and the results were expressed as Trolox equivalents. The results are summarized in Table 3, where a high content of phenols and antioxidant capacity for the extract of the invention is appreciated.

**Table 3. Characterization of the extract of husk and leaves, made under optimized conditions.**

| **Sample** | **Humidity (g/100 g f.m)** | **TP (mg GAE/100 mL)** | **FRAP (mg Trolox/100 mL)** |
|---|---|---|---|
| Optimal extract of husk and leaves | 99.0 ± 0.0 | 91.8 ± 3.3 | 97.2 ± 2.8 |

| | | | |
|---|---|---|---|
| Average values ± standard deviation; n=3. f.m: fresh matter; d.m: dry matter. TP: Total phenols; GAE: Gallic acid equivalent. FRAP: Ferric Reducing Antioxidant Power method. | | | |

### 1.2.1 Toxicity assessment of husk and leaf extract

As we indicated, a relevant element is the potential toxicity that the extracts used in the invention could have. Therefore, the following tests were developed in order to establish whether the extracts of the invention can be consumed safely.

### Cell viability analysis.

The test consisted of evaluating the cytotoxic effect of walnut husk and leaf extract, in different concentrations, on viability in cell culture. For this, the HEPG-2 line was used as a cell matrix, which are immortalized human liver cells.

To evaluate the effect on viability in cell culture, an assay was performed with the Invitrogen MTT kit (Ref.V13154; lot:1924421), whose technique consists of a colorimetric analysis that measures the metabolic activity of the cell. This assay was carried out following the protocol provided by the kit supplier, using a 96-well plate with HEPG-2 cell culture with an approximate confluence of 80%. Taking the cytotoxic compound SDS 0.2% as a positive control and the cell culture with its medium as a negative control.

Table 4 shows the percentage of viability of the cells exposed to different concentrations of walnut extract. In this it is observed that the husk extract has a cell viability close to 100%, and that no significant differences are observed when comparing the different concentrations used. Therefore, it can be stated that the husk extract does not have a cytotoxic effect on HEPG-2 cells.

**Table 4. Percentage of viability in cell culture (HEPG-2).**

| **Samples** | **Extract concentration (µg/mL)** | **Cell viability (%)** |
|---|---|---|
| Husk extract | 10 | 109.2 ± 16.3 |
| | 50 | 102.4 ± 21.4 |
| | 100 | 138.1 ± 28.2 |
| ***P-Value*** | | ***0.4863*** |
| Positive control | SDS 0.2% | 22.9 |
| Negative control | Cells only | 100 |

| | | |
|---|---|---|
| Average values ± standard deviation; n=3. Different letters present significant differences. | | |

To confirm these results, the Caco-2 cell toxicity assay was included, the results are presented in Table 5. This shows the percentage of viability of the cells exposed to different concentrations of walnut extract. Showing that the husk extract presents a cell viability close to or greater than 100%, showing a tendency to reduce cell viability with increasing concentrations, but all the results are greater than 100%. Therefore, it can be said that they do not have a cytotoxic effect on Caco-2 cells.

**Table 5. Percentage of viability in cell culture (Caco-2).**

| **Samples** | **Extract concentration (µg/mL)** | **Cell viability (%)** |
|---|---|---|
| Extract of husk and leaf | 10 | 131.1 ± 8.2b |
| | 50 | 126.7± 14.2^{b} |
| | 100 | 105.1± 9.8^{a} |
| ***P-Value*** | | ***0.0005*** |
| Positive control | SDS 0.2% | 3.94± 0.2 |
| Negative control | Cells only | 100 ± 19.8 |

| | | |
|---|---|---|
| Average values ± standard deviation; n=3. Different letters present significant differences. | | |

In this way, the extracts of the invention are not shown to have a toxic effect when applied directly to human cells, so it is shown that they are feasible to be used in food compositions.

### Example 2. Obtaining microparticles for controlled release of the invention.

To obtain the microparticles of the invention, tests were carried out with the encapsulating and channeling agents already indicated in the description.

### 2.1 Encapsulation of the extract, with water-soluble polymer and a channeling agent.

The different encapsulating agents (EA) were tested either alone or in combinations, the agents used were: Inulin (In); mixture of In with soy protein isolate (SPI); mixing of In with Capsule; maltodextrin (MD; mixture of MD with SPI and mixture of MD with Capsule. In all cases, the microparticles were made maintaining a ratio of EA and extract of 1:1 and the process temperature was between 100-180°C.

The first microencapsulation tests were performed for the optimal extract of husk and leaf obtained in example 1.2, in this activity, called *screening,* 6 encapsulation treatments were performed, in which the effect of the encapsulating agent on the encapsulation efficiency of total phenols and antioxidant capacity (FRAP) was studied.

To make the microparticles, the polymers were solubilized separately, mixed in each proportion to be analyzed and allowed to cool to <30°C.

When the temperature was adequate, the extract of the invention, 10g, was added to 10 g of EA and homogenized at 15,000 rpm for 5 min with an ultraturrax.

The solutions obtained were incorporated into a Buchi-290 dryer with an inlet temperature of 160°C. The air flow, feed ratio and atomization pressure corresponded to: 600 L/h, 3 mL/min (5%) and 5 bar, respectively, obtaining microparticles of an approximate size of 10 to 50 micrometers.

The microparticles obtained were stored in darkness at -20°C until further analysis.

Table 6 presents the results obtained from the microparticles of the husk and leaf extract. The encapsulation efficiencies (%EE) of the microparticles produced are high with all the polymers studied (>80%) for both variables studied, the highest values are observed in the microparticles made with maltodextrin (alone and in mixtures). In addition, a clear decrease in the %EE of TP and FRAP is observed when adding a lipophilic encapsulating agent (SPI and Capsule) to the hydrophilic (In and MD), this is expected due to the lower interaction between the extract and the lipophilic encapsulating agent. However, its use is necessary to control the release in a mostly lipid medium.

**Table 6. Characterization of the microparticles of the encapsulation tests for the extract of walnut husk and leaf of the invention.**

| **Treatment** | **%EE Total phenols** | **%EE FRAP** |
|---|---|---|
| In | 98.4±1.2 | 90.4±0.2 |
| In:SPI | 98.2±1.6 | 89.3±0.8 |
| In:Capsule | 97.1±2.7 | 91.0±0.4 |
| MD | 90.1±2.0 | 92.5±0.2 |
| MD:SPI | 97.7±1.9 | 93.0±0.3 |
| MD: Capsule | 97.1±4.6 | 92.1±1.1 |
| ***P-Value*** | ***0.0001*** | ***0.0000*** |

| | | |
|---|---|---|
| %EE: Encapsulation Efficiency In: inulin; SPI: soy protein isolate; MD: maltodextrin | | |

All the studied mixtures of encapsulating agents had a good performance, where the preferred channeling agent is capsule, due to the higher encapsulation efficiency values, %EE, and that the preferred encapsulating agent is maltodextrin.

### 2.1.1. Microparticles for food matrices with a fat content greater than 20%.

As we indicated, microparticles with polymer encapsulating agents insoluble in lipid matrices and channeling agents are required for these foods. Therefore the nanoparticles formed in 2.1 mixtures of these two encapsulating agents, that is: Inulin:SPI (soy protein isolate); Inulin:capsule, Maltodextrin:SPI, maltodextrin:capsule, are optimal for preserving foods with 20%, 50% or more fat, such as mayonnaise, butter, oils or others.

### 2.2 Encapsulation of a hydroalcoholic extract of walnut husk and walnut leaves in Maltodextrin-Capsule for fat contents greater than 20%.

To establish the best encapsulation conditions, a Box-Behnken experimental design was applied, with a total of 15 experiments. The independent variables were the ratio of husk and leaf extract: Maltodextrin (1:0.5-2), the temperature of the inlet air (100-200°C) and the content of Capsule (0-10% of the encapsulating agent). The dependent variables were the encapsulation efficiency of total phenols and antioxidant capacity, analyzed by FRAP method.

The 100 g feed solutions were each prepared as follows:
✔ The polymers maltodextrin and Capsule were solubilized separately, mixed and allowed to cool to <30°C.
✔ The extract (10g) was added and homogenized at 15,000 rpm for 5 min with an ultraturrax. The solution was fed to the Buchi-290 dryer with an inlet temperature of 160°C. The air flow, feed ratio and atomization pressure corresponded to: 600 L/h, 3 mL/min (5%) and 5 bar, respectively. The microparticles obtained were stored in darkness at -20°C until further analysis. Table 7 presents the experimental conditions and response variable values for the EP:MD-Capsule system.

Table 7 shows the values obtained from the response variables analyzed from the EH:MD-Capsule system. In the encapsulation efficiency, values between 93.6 and 99.2% are observed for total phenols and between 86.1 and 92.7% for the antioxidant capacity, measured by FRAP. In general, high encapsulation efficiencies (~90%) are observed, due to the chemical interactions that occur between maltodextrin and the phenolic compounds present in the walnut husk and leaf extract.

**Table 7. Characterization of microparticles from encapsulation tests for optimal walnut leaf extract.**

| **Treatment** | **Relation EH/MD** | **Inlet Temperature (°C)** | **Capsule (%)** | **Total phenols (EE%)** | **FRAP (EE%)** |
|---|---|---|---|---|---|
| **T1** | 1:1.25 | 160 | 0 | 96.6±0.5 | 90.1±1.5 |
| **S2** | 1:0.5 | 160 | 10 | 95.1±0.3 | 91.5±0.4 |
| **S3** | 1:1.25 | 160 | 10 | 98.0±0.6 | 89.0±0.2 |
| **S4** | 1:1.25 | 160 | 0 | 98.1±0.3 | 90.2±0.4 |
| **S5** | 1:1.25 | 120 | 5 | 98.8±0.0 | 90.9±0.8 |
| **S6** | 1:2 | 160 | 5 | 99.2±0.1 | 89.6±0.5 |
| **S7** | 1:0.5 | 200 | 10 | 94.0±1.0 | 92.2±0.8 |
| **S8** | 1:1.25 | 200 | 10 | 93.6±2.4 | 90.6±0.6 |
| **S9** | 1:2 | 120 | 5 | 97.9±1.8 | 87.3±0.4 |
| **S10** | 1:2 | 200 | 0 | 97.3±0.6 | 88.4±0.4 |
| **S11** | 1:0.5 | 120 | 5 | 96.8±0.1 | 89.5±1.1 |
| **S12** | 1:1.25 | 200 | 0 | 97.6±0.5 | 86.1±1.3 |
| **S13** | 1:1.25 | 120 | 5 | 97.7±0.6 | 88.0±1.5 |
| **S14** | 1:2 | 160 | 5 | 98.9±0.8 | 88.4±0.2 |
| **S15** | 1:0.5 | 160 | 5 | 97.9±0.3 | 92.7±0.3 |

| | | | | | |
|---|---|---|---|---|---|
| Average values ± Standard deviation EH: extract of walnut husks and leaves; MD:Maltodextine EE%: encapsulation efficiency FRAP: Ferric Reducing Antioxidant Power method. | | | | | |

### 2. Characterization of microparticles

A characterization was carried out on the microparticles of walnut husk and leaf extract made under the conditions of the invention, to use them in the high-fat (EH:MD-Capsule) and low-fat (EH:MD) matrices. Table 8 shows the results.

**Table 8. Characterization of microparticles obtained under optimal conditions of EH:MD-Capsule, EH:MD systems:**

| **Parameter** | **EH:MD-Capsule** | **EH:MD** |
|---|---|---|
| **EH:EA ratio** | 1:2 | 1:2 |
| **CA (%)** | 4.4 | 0 |
| **Temperature (°C)** | 120 | 120 |
| **Yield (%)** | 75.7 | 77.1 |
| **TP(mg GAE/g)** | 1.2±0.0 | 1.1±0.0 |
| **FRAP (µmol ET/g)** | 9.7±0.5 | 9.7±0.4 |
| **EE% TP** | 98.6±0.0 | 98.6±0.2 |
| **EE% FRAP** | 93.7±0.2 | 94.2±0.3 |
| **Humidity (%)** | 4.1±0.0 | 3.6±0.2 |

| | | |
|---|---|---|
| Average values ± Standard deviation EH: extract of walnut husk and leaf; EA: Encapsulating agent; CA: Channeling agent; MD: Maltodextrin; TP: total phenols; GAE: Gallic acid equivalent. EE%: encapsulation efficiency FRAP: Ferric Reducing Antioxidant Power method. | | |

### Example 3. Application of the invention's nanoparticles in fatty foods

### 3.1. Long-term trial of oxidative and microbial stability of mayonnaise

### 3.1.1. Study of oxidative and microbial stability of mayonnaise

Mayonnaise was made on a laboratory scale using mayonnaise powder, the flowchart is shown in Diagram 3.

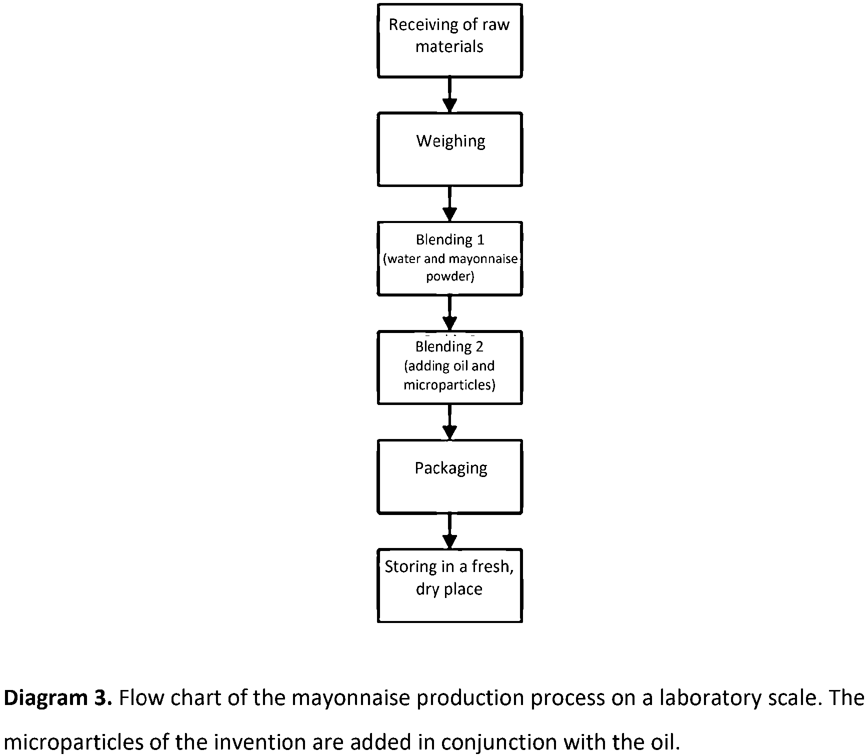

The tests performed for the stability tests are shown in Table 9. Where the stability of mayonnaise without any antioxidant (control) was studied, the stability when using a frequently used synthetic antioxidant such as EDTA, and a microparticle of the invention for foods with more than 70% fat, which corresponds to Maltodextrin with capsule as a channeling agent (EH:MD-Capsule). The dose used was in accordance with the food safety regulations (FSR) and corresponded to 5.5 g of microparticles per 2 kilos of mayonnaise. The microbiological results obtained for AMR are shown in Table 10, for *S. aureus* they are shown in Table 11, for *Salmonella* they are shown in Table 12.

**Table 9. Mayonnaise formulation for stability tests.**

| **Recipe (2000 grams)** | **Control** | **synthetic** | **MD-CAP mayonnaise** |
|---|---|---|---|
| **Mayonnaise powder (g)** | 142.9 | 142.9 | 142.9 |
| **Water (g)** | 571.4 | 571.4 | 571.4 |
| **Oil (g)** | 1285.7 | 1285.7 | 1285.7 |
| **total** | 2000 | 2000 | 2000 |
| **Fat in 100 grams** | 60.5 | 60.5 | 60.5 |
| **EDTA (mg)** | 0 | 500 | 0 |
| **EH:MD-CAP (g)** | 0 | 0 | 5.5 |

**Table 10. Microbiological results (AMR).**

| **Analysis** | | **AMR** | | |
|---|---|---|---|---|
| **Samples** | **Treatment** | **Sampling (on refrigeration days)** | **Title (CFU/gr)** | **FSR Allowed Range (CFU/gr)** |
| control synthetic MD-CAP | | | 0 | |
| | Time 0 | 0 | 0 | |
| | | | 0 | |
| control synthetic MD-CAP | | | 0 | |
| | | 6 days | 0 | |
| | | | 0 | |
| control synthetic MD-CAP | 4°C | | 0 | |
| | | 13 days | 0 | 10^4 - 10^5 |
| | | | 0 | |
| control synthetic MD-CAP | | | 0 | |
| | | 20 days | 2x10^4 | |
| | | | 0 | |
| control synthetic MD-CAP | | | 0 | |
| | | 27days | 1.25 x 10^5 | |
| | | | 0 | |

The results show that mesophilic aerobic microorganisms (AMR) were detected from day 20 of conservation when EDTA is used as a preservative, the microparticles of the invention allow the mayonnaise to remain free of AMR throughout the period studied.

**Table 11. Microbiological results (S. aureus).**

| **Analysis** | | **S. aureus** | | |
|---|---|---|---|---|
| **Samples** | **Treatment** | **Sampling (on refrigeration days)** | **Title (CFU/gr)** | **FSR Allowed Range (CFU/gr)** |
| control synthetic MD-CAP | | | 0 | |
| | Time 0 | 0 | 0 | |
| | | | 0 | |
| control synthetic MD-CAP | | | 0 | |
| | | 6 days | 0 | |
| | | | 0 | |
| control synthetic MD-CAP | 4°C | | 3 x 10^3 | |
| | | 13 days | 0 | 10 - 10^2 |
| | | | 0 | |
| control synthetic MD-CAP | | | 4.5 x10^2 | |
| | | 20 days | 1.85 x 10"3 | |
| | | | 0 | |
| control synthetic MD-CAP | | | 7.5 x 10^3 | |
| | | 27 days | 1.15 x 10^4 | |
| | | | 0 | |

Regarding this important pathogen, it was seen that it develops in mayonnaise without preservative from day 13, and with EDTA preservative from at least day 20. While using the microparticles of the invention, S. *aureus* was not observed in the period studied.

Finally, no development of salmonella was detected in any of the conditions analyzed.

These results clearly show the advantage of using the invention's preservative for the preservation of high-fat foods.

**Table 12. Microbiological results (Salmonella).**

| **Analysis** | | **Salmonella** | | |
|---|---|---|---|---|
| **Samples** | **Treatment** | **Sampling (on refrigeration days)** | **Title (CFU/gr)** | **FSR Allowed Range (CFU/gr)** |
| control synthetic MD-CAP | | | 0 | |
| | Time 0 | 0 | 0 | |
| | | | 0 | |
| control synthetic MD-CAP | | | 0 | |
| | | 6 | 0 | |
| | | | 0 | |
| control synthetic MD-CAP | 4°C | | 0 | |
| | | 13 | 0 | 0 |
| | | | 0 | |
| control synthetic MD-CAP | | | 0 | |
| | | 20 | 0 | |
| | | | 0 | |
| control synthetic MD-CAP | | | 0 | |
| | | 27 | 0 | |
| | | | 0 | |

### 3.1.2. Oxidative stability study of vegetable oil

The effect of the addition of microparticles of walnut leaves and husk in maltodextrin and capsule as a channeling agent on the oxidative stability of sunflower oil at 25°C and 40°C was studied.

For this purpose, 4 different microparticles were obtained according to the invention, as described in example 2.1, with the compositions indicated in table 13.

**Table 13. Conditions for the production of the microparticles of walnut leaf and husk extract using MD as encapsulating agent and/or Capsule as channeling agent.**

| **Code** | **Maltodextrin (g)** | ***Channeling Agent (%)** | **TP (mg GAE/g microparticle)** |
|---|---|---|---|
| MCP1 | 20 | 0 | 10.3±0.5 |
| MCP2 | 20 | 4.4 | 10.5±0.3 |
| MCP3 | 15 | 4.4 | 13.9±0.7 |
| MCP4 | 10 | 4.4 | 17.1±1.1 |

| | | | |
|---|---|---|---|
| *Percentage of capsule calculated in relation to the amount of MD. TP: Total polyphenols | | | |

The treatments to evaluate the oxidative stability of sunflower oil were:
- Sunflower oil control, (Control oil) without the addition of microparticles (SO).
- Sunflower oil added with MCP1 (Oil +mcp1) equivalent to 400 mg GAE/kg oil, i.e. 38.84 g MCP1/kg oil.
- Sunflower oil added with MCP2 (Oil +mcp2) equivalent to 400 mg GAE/kg oil, i.e. 38.10 g MCP2/kg oil.
- Sunflower oil added with MCP3 (Oil +mcp3) equivalent to 400 mg GAE/kg oil, i.e. 28.78 g MCP2/kg oil.
- Sunflower oil added with MCP4 (Oil +mcp4) equivalent to 400 mg GAE/kg oil, i.e. 23.39 g MCP2/kg oil.

The sunflower oil systems (7 g) without and with microparticles were placed in 10 mL test tubes, then the husk extract microparticles were added in an amount equivalent to 400 mg GAE/kg oil. The tubes were placed in a stove at 25°C and 40°C. The tubes were removed at defined time intervals to determine the degree of oxidation of the oil, evaluating the peroxide index in the samples.

The determination of the peroxide index in sunflower oil was performed according to the standard method Cd 8-53 (AOCS, 1993).

Table 14 presents the peroxide index results of sunflower oil samples with and without microparticles, stored at 25°C and 40°C for a period of 28 days. The results obtained show the antioxidant effect of all oil samples with the addition of microparticles with walnut leaf and husk extract, compared to the same control sample without microparticle addition.

It is observed that at 25°C the oil with the microparticles of the invention prevents oxidation of the oil by almost 50% (control 10.2; microparticles approx. 5.7 on average. While at the 40°C condition, oxidation was prevented by approximately 25% on average for the different conditions used.

This shows that the microparticles of the invention have a prolonged antioxidant action over time, due to their controlled release mechanism, which prevents the oxidation of foods rich in fats, avoiding rancidity of the latter.

**Table 14. Results oxidative stability of sunflower oil with and without husk extract microparticles during storage at 25°C and 40°C.**

| **Sample** | **Warm-up days** | **Peroxide index (meq. of oxygen peroxide/kg of fat) at 25°C** | **Peroxide index (meq. of oxygen peroxide/kg of fat) at 40°C** |
|---|---|---|---|
| Oil control | 0 | 4.1 | 4.1 |
| Oil control | 7 | 4.9 | 6.2 |
| Oil + mcp1 | | 4.2 | 5.3 |
| Oil + mcp2 | | 4.4 | 5.1 |
| Oil + mcp3 | | 4.3 | 5.0 |
| Oil + mcp4 | | 4.2 | 4.9 |
| Oil control | 14 | 5.3 | 14.0 |
| Oil + mcp1 | | 4.1 | 10.3 |
| Oil + mcp2 | | 4.0 | 8.9 |
| Oil + mcp3 | | 4.1 | 8.6 |
| Oil + mcp4 | | 3.9 | 8.7 |
| Oil control | 21 | 7.1 | 23.0 |
| Oil + mcp1 | | 5.0 | 16.7 |
| Oil + mcp2 | | 4.9 | 15.6 |
| Oil + mcp3 | | 4.9 | 15.1 |
| Oil + mcp4 | | 4.8 | 12.8 |
| Oil control | 28 | 10.2 | 24.2 |
| Oil + mcp1 | | 5.8 | 18.6 |
| Oil + mcp2 | | 5.7 | 18.5 |
| Oil + mcp3 | | 5.9 | 18.2 |
| Oil + mcp4 | | 5.5 | 18.9 |

## Claims

1. Method of obtaining a natural preservative and antioxidant for foods with a proportion of fats greater than 20% by weight **CHARACTERIZED in that** it includes the following steps:
a) providing walnut husk and/or crushed walnut leaves;
b) performing a hydroalcoholic extraction with a solvent comprising 20 to 80% ethanol and 80 to 20% soft water for 10 to 180 minutes; in a ratio of plant material to solvent between 1:10 and 1:50 w/v;
c) separating the solvent constituting the extract,
d) mixing said extract with a solution of a mixture of a water-soluble polymer and a fat-soluble polymer in a ratio of 0.5-2:4.5-18, and homogenizing,
e) spray-drying the mixture,
f) obtaining a powder comprising the microencapsulated extract.

2. Method according to claim 1 **CHARACTERIZED in that** in step a) the walnut husk and/or walnut leaves have a moisture percentage of less than 10%.

3. Method according to claim 1 **CHARACTERIZED in that** in step b) the extraction is carried out with 60% ethanol and 40% water.

4. Method according to claim 1 **CHARACTERIZED in that** in step b) it can be repeated between 1 to 3 times.

5. Method according to claim 1 **CHARACTERIZED in that** in step d) the water-soluble polymer is chosen between maltodextrin and inulin.

6. Method according to claim 1 **CHARACTERIZED in that** in step d) the fat-soluble polymer, or channeling agent, is chosen between soy protein isolate and capsule.

7. Method according to claim 6 **CHARACTERIZED in that** the fat-soluble polymer, or channeling agent, is in a proportion of between 1 and 10% with respect to the water-soluble polymer.

8. Method according to claim 1 **CHARACTERIZED in that** the extract obtained in step c) contains total phenols at a concentration greater than 35 mg Gallic acid equivalent in 100 mL, and an antioxidant capacity greater than 70 mg Trolox Equivalent in 100 mL of extract.

9. A natural preservative and antioxidant for foods with a proportion of fats greater than 20% by weight, obtained according to the method of clause 1 **CHARACTERIZED in that** it includes extract of walnut husk and/or walnut leaves microencapsulated in a water-soluble polymer containing a channeling agent or fat-soluble polymer, where the ratio between extract and polymer is 1:0.5-2.

10. A natural preservative and antioxidant according to claim 9 **CHARACTERIZED in that** the extract of walnut husk and/or walnut leaves microencapsulated has between 8 to 20 mg Gallic acid equivalents (GAE) per g of microparticle.

11. A natural preservative and antioxidant according to claim 9 **CHARACTERIZED in that** the water-soluble polymer contains 1 to 10% of a fat-soluble polymer, or channeling agent.

12. A natural preservative and antioxidant according to claim 11 **CHARACTERIZED in that** the water-soluble polymer is chosen between maltodextrin and inulin.

13. Preservative and natural antioxidant according to claim 11 **CHARACTERIZED in that** the fat-soluble polymer, or channeling agent, is chosen between soy protein isolate and capsule.

14. Use of the preservative and antioxidant according to claim 9 **CHARACTERIZED in that** it is useful for preserving foods or food compositions with a fat content greater than 20%.

15. Use according to claim 14 **CHARACTERIZED in that** it is added in a sufficient quantity to obtain between 200 and 800 mg Gallic acid equivalents (GAE) per kilogram of food or food compositions.

16. Use according to claim 15 **CHARACTERIZED in that** it is added in a sufficient quantity to obtain between 300 and 600 mg Gallic acid equivalents (GAE) per kilogram of food or food compositions.

17. Use according to claim 16 **CHARACTERIZED in that** it is useful for preserving foods or food compositions with a fat content greater than 50%.
